Europäisches Patentamt

European Patent Office

Office européen des brevets

(11) Numéro de publication : **0 357 501 B1**

# (12) FASCICULE DE BREVET EUROPEEN

(45) Date de publication du fascicule du brevet :
**13.05.92 Bulletin 92/20**

(51) Int. Cl.⁵ : **A23L 2/30**, C12G 1/02

(21) Numéro de dépôt : **89402353.0**

(22) Date de dépôt : **29.08.89**

(54) **Procédé de clarification de moût de raisins et moût obtenu par ce procédé.**

(30) Priorité : **30.08.88 FR 8811366**

(43) Date de publication de la demande :
**07.03.90 Bulletin 90/10**

(45) Mention de la délivrance du brevet :
**13.05.92 Bulletin 92/20**

(84) Etats contractants désignés :
**CH DE ES GR IT LI**

(56) Documents cités :
**AU-B- 3 716 178**
**FR-A- 2 264 491**
**US-A- 4 162 972**
**CHEMICAL ENGINEERING, vol. 85, no. 9, avril 1978, pages 89-90: "Membrane systems make concentration cheaper"**
**Technologie des Weines, G. Troost, p. 129/130, 147, 668, 669**

(73) Titulaire : **DEGREMONT S.A.**
**183, Avenue du 18 Juin 1940**
**F-92508 Rueil-Malmaison Cédex (FR)**
Titulaire : **CHATEAU LEOVILLE LAS CASES (Société Civile)**
**Saint Julien Beuchevelle**
**F-33250 Pauillac (FR)**

(72) Inventeur : **Delon, Michel**
**57 Croix de Segney**
**F-33000 Bordeaux (FR)**
Inventeur : **Wajsfelner, René**
**8, résidence des Gémeaux**
**F-94260 Fresnes (FR)**

(74) Mandataire : **Armengaud, Charles**
**Cabinet ARMENGAUD AINE 3, Avenue Bugeaud**
**F-75116 Paris (FR)**

## Description

La présente invention concerne un procédé de clarification de moût de raisins.

On connaît (AU-B-3716178) un procécé d'obtention de vins qui consiste à égrapper et fouler la vendange, séparer la fraction solide (peau + pépins) de la fraction liquide, clarifier cette fraction liquide et enfin effectuer la fermentation, c'est-à-dire la vinification.

L'invention se propose d'apporter un perfectionnement à un tel procédé de traitement de la vendange et elle a donc pour objet un procédé pour la clarification et la concentration de moûts de raisins, suivant lequel le moût, provenant d'une cuve de vinification où se trouve la vendange égrappée et foulée est amené à passer sur un appareil où sont séparées la phase solide et la phase liquide de ce moût, puis est introduit dans un appareil de flottation, caractérisé en ce que le moût clarifié est amené dans une cuve reliée à une boucle de concentration par osmose inverse.

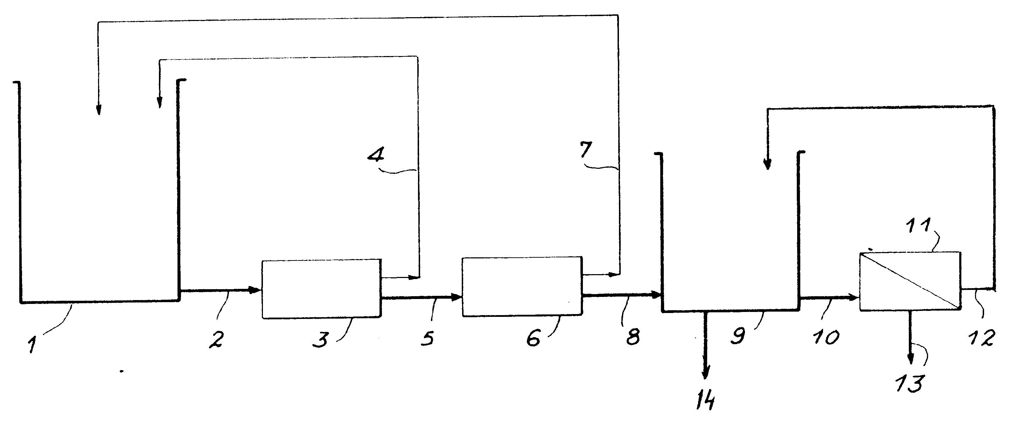

La figure du dessin annexe, représente un schéma par blocs du déroulement des opérations du procédé suivant l'invention.

La vendange, égrappée et foulée, est introduite dans une cuve (1) de vinification d'où elle est amenée à l'état de moût par une canalisation (2) dans un appareil (3) destiné à opérer la séparation des phases solide et liquide constituant le moût.

Un tel appareil peut, par exemple, être constitué par un appareil du type faisant l'objet du brevet français déposé par DEGREMONT le 9 rai 1985 sous le n° 85.7026 et publié sous le n° 2.581.559.

La phase solide séparée peut éventuellement et totalement ou partiellement, être recyclée par la canalisation (4), dans la cuve (1) de vinification.

Le moût, ainsi débarrassé de la pulpe, passe par une canalisation 5 dans une enceinte (6) où a lieu, par flottation, la séparation des matières restées en suspension dans le moût. Cette enceinte est munie d'un appareil assurant la production de fines bulles d'air ou d'un gaz inerte. Un tel appareil peut par exemple être constitué par un appareil du type faisant l'objet du brevet déposé par DEGREMONT le 26 novembre 1970 sous le n° 70.42.486 et publié sous le n° 2.115.053.

Ces matières peuvent, elles aussi, être totalement ou partiellement renvoyées, par une canalisation (7), à la cuve (1).

A sa sortie de l'appareil de flottation (6), le moût, clarifié, est amené par une canalisation (8) dans une cuve (9) participant à la concentration, elle-même reliée par une canalisation (10) à un appareil d'osmose inverse (11).

Dans ce dernier appareil, d'effectue la séparation de l'eau, dite eau végétale, qui est évacuée par la canalisation (13), et d'un moût plus concentré qui retourne à la cuve (9) par sa canalisation (12).

Enfin le moût concentré est soutiré vers l'utilisation par la tuyauterie (14).

Le réglage du débit de recyclage à travers (12) et du débit de soutirage à travers (14), permet de porter la concentration du moût au niveau exactement souhaité.

Le procédé suivant l'invention présente, par rapport aux procédés classiques de traitement des moûts en vue de leur vinification ultérieure, les avantages suivants :

Il assure :
– une séparation continue des pulpes et grains de la partie colloïdale tout en autorisant un retour des parties les plus utiles en tête du processus de vinification,
– une amélioration sensible de la qualité des moûts et leur concentration uniquement par des moyens physiques.

Il évite :
– toute oxydation des moûts, grâce à la rapidité avec laquelle s'exécute le procédé susceptible d'être conduit sous atmosphère de gaz inerte,
– toute manipulation et tout transvasement des moûts.

Enfin, il permet une clarification efficace moyennant une faible consommation d'énergie.

## Revendications

1. Procédé pour la clarification et la concentration de moûts de raisins, suivant lequel le moût, provenant d'une cuve de vinification où se trouve la vendange égrappée et foulée est amené à passer sur un appareil où sont séparées la phase solide et la phase liquide de ce moût, puis est introduit dans un appareil de flottation, caractérisé en ce que le moût clarifié est amené dans une cuve (9) reliée à une boucle de concentration par osmose inverse (11-12).

2. Procédé suivant la revendication 1, caractérisé en ce que la phase solide séparée est, totalement ou partiellement, recyclée dans la cuve de vinification.

3. Procédé suivant la revendication 1, caractérisé en ce que les matières solides séparées par flottation sont, totalement ou partiellement, recyclées dans la cuve de vinification.

4. Procédé suivant la revendication 1, caractérisé en ce que la flottation est effectuée au moyen d'un gaz inerte.

5. Procédé suivant la revendication 1, caractérisé en ce que la concentration du moût, effectuée par osmose inverse, est fixée à un niveau réglé par le choix du débit de recyclage.

## Patentansprüche

1. Verfahren zur Klärung und Konzentration von Traubenmost, bei dem der aus einer Gärkufe, in der sich die entrappte und gekelterte Lese befindet, hervorgehende Most über eine Vorrichtung geführt wird, wo die feste Phase und die flüssige Phase des Mosts getrennt werden, und danach in eine Flotationsvorrichtung eingeführt wird, dadurch gekennzeichnet, daß der geklärte Most in eine Kufe (9) geführt wird, die an einen Konzentrationskreislauf mit inverser Osmose (11 - 12) angeschlossen ist.

2. Verfahren nach Anspruch 1, dadurch gekennzeichnet, daß die abgetrennte feste Phase völlig oder teilweise in die Gärkufe zurückgeführt wird.

3. Verfahren nach Anspruch 1, dadurch gekennzeichnet, daß die durch Flotation abgetrennten Feststoffe völlig oder teilweise in die Gärkufe zurückgeführt werden.

4. Verfahren nach Anspruch 1, dadurch gekennzeichnet, daß die Flotation mit Hilfe eines Inertgases bewirkt wird.

5. Verfahren nach Anspruch 1 dadurch gekennzeichnet, daß die durch die inverse Osmose bewirkte Konzentration des Mosts durch die Regelung der Rückführmenge auf einen bestimmten Wert eingestellt wird.

# Claims

1. A method for the clarification and concentration of grape musts, wherein the must, coming from a vinification vat where the picked up and crushed harvested grapes have been placed, is brought to pass on an apparatus where the solid phase and the liquid phase of said must are separated, then is introduced in a flottation apparatus, characterized in that the clarified must is conveyed into a vat (9) connected to a reverse osmosis concentration loop (11-12).

2. A method according to claim 1, characterized in that the separated solid phase is recycled, totally or partially, in the vinification vat.

3. A method according to claim 1, characterized in that the solid matters separated by flottation are, totally or partially, recycled in the vinification vat.

4. A method according to claim 1, characterized in that the flottation is effected by means of an inert gas.

5. A method according to claim 1, characterized in that the concentration of the must, effected by reverse osmosis, is fixed to level set by the choice of the recycling throughput.

EP 0 357 501 B1

4

1

2

3

4

5

6

7

8

9

10

11

12

13

14